# EUROPÄISCHE PATENTSCHRIFT

(11) **EP 3 352 876 B1**
(45) Veröffentlichungstag und Bekanntmachung des Hinweises auf die Patenterteilung: **09.10.2019**
(21) Anmeldenummer: 16757559.6
(22) Anmeldetag: 13.08.2016
(51) Int. Cl.: B01D 29/21, B01D 29/96

(54) **FILTERVORRICHTUNG MIT KUPPLUNGSELEMENT**
FILTRATION DEVICE WITH COUPLING ELEMENT
DISPOSITIF FILTRANT AVEC ELEMENT DE ACOUPLEMENT

(30) Priorität: 25.09.2015 DE 102015012558
(43) Veröffentlichungstag der Anmeldung: 01.08.2018
(73) Patentinhaber: Hydac Filtertechnik GmbH, 66280 Sulzbach/Saar (DE)
(72) Erfinder: MAURER, Patrick, 66280 Sulzbach (DE); HENNES, Stefan, 66540 Hangard (DE); SAKRASCHINSKY, Michael, 66386 St. Ingbert (DE)
(74) Vertreter: Bartels, Martin Erich Arthur
(86) Internationale Anmeldenummer: PCT/EP2016/001393
(87) Internationale Veröffentlichungsnummer: WO 2017/050412

(56) Entgegenhaltungen:
- EP-A1- 1 714 687
- EP-A1- 1 731 210
- WO-A1-2010/123344
- WO-A1-2015/092523
- DE-A1- 19 707 132

## Beschreibung

Die Erfindung betrifft eine Filtervorrichtung mit einem Filterelement, das in einem Filtergehäuse aufnehmbar ist, das aus mindestens zwei miteinander verbindbaren Gehäuseteilen besteht, wobei das Filterelement an einem Gehäuseteil mittels einer Schraubverbindung lösbar festlegbar ist und zur Verbindung der Gehäuseteile eine zweite Schraubverbindung vorgesehen ist.

Filtervorrichtungen mit mindestens einem in einem Gehäuse aufnehmbaren Filterelement, das mit einem entsprechenden Systemdruck oder Fluidbetriebsdruck durchströmbar ist, sind Stand der Technik und finden beispielsweise bei Hydraulikanlagen in von Hydrauliköl durchströmten Systemzweigen verbreitete Anwendung. Eine Filtervorrichtung der eingangs genannten Gattung, bei der das Filterelement mittels einer Schraubverbindung mit einem Gehäuseteil verbindbar ist und die das Gesamtgehäuse der Vorrichtung bildenden Gehäuseteile ebenfalls mittels einer Schraubverbindung mit einander verbindbar sind, ist in dem Dokument DE 10 2011 120 680 A1 offenbart. Bei dieser bekannten Filtervorrichtung weist das Filterelement an der Öffnung einer Endkappe ein Innengewinde auf, das ein Gewindeelement einer Schraubverbindung bildet, mit der das Filterelement an einem Gehäusekopf festlegbar ist, der ein Gehäuseteil des aus Gehäusekopf und Gehäusetopf bestehenden Gesamtgehäuses bildet und ein Außengewinde als Gewindeelement der Schraubverbindung mit dem Filterelement aufweist. Der Filterkopf ist mit dem Filtertopf über eine weitere Schraubverbindung verschraubbar.

Das Dokument EP 1 731 210 A1 zeigt eine Filtervorrichtung mit einem Filterelement, das in einem Filtergehäuse aufnehmbar ist, welches aus zwei verbindbaren Gehäuseteilen besteht, wobei das Filterelement an einem Gehäuseteil mittels einer Schraubverbindung lösbar befestigt ist.

Die Betriebssicherheit von Hydrauliksystemen, in denen solche Filtervorrichtungen zur Filtration der benutzten Betriebsfluide eingesetzt sind, ist in hohem Maße von der einwandfreien Funktion der Filtervorrichtungen abhängig. Um Betriebsstörungen zu vermeiden, die zur Beschädigung oder dem Ausfall betreffender Hydrauliksysteme führen können, ist eine sorgfältige Wartung der Filtervorrichtungen erforderlich, wobei insbesondere verbrauchte Filterelemente gegen frische Filterelemente ausgetauscht werden müssen. Um einen rationellen Betrieb zu ermöglichen, ist es wesentlich, dass die Wartungsarbeiten, insbesondere der Filterelementwechsel, schnell und sicher ausgeführt werden können. Die bekannten Filtervorrichtungen lassen diesbezüglich zumindest teilweise noch Wünsche offen. Obwohl die erwähnte, bekannte Filtervorrichtung sich insofern durch ein günstiges Betriebsverhalten auszeichnet, als das Filterelement durch eine Schraubverbindung sicher im Filtergehäuse festgelegt ist, gestaltet sich die Wartung verhältnismäßig zeitaufwendig, weil für Montage und Demontage betreffender Filterelemente jeweils zwei Schraubverbindungen unabhängig voneinander zu betätigen sind. Für die Montage "frischer Filterelemente" muss jeweils die Schraubverbindung am vom Gehäusetopf abgenommenen Filterkopf festgezogen werden, wonach die Verschraubung des Filterkopfs am Filtertopf hergestellt wird. In Entsprechung sind für die Demontage zwei gesonderte Arbeitsschritte erforderlich.

Ausgehend von diesem Stand der Technik stellt sich die Erfindung die Aufgabe, eine Filtervorrichtung der eingangs genannten Gattung zur Verfügung zu stellen, die sich durch eine verbesserte Wartungsfreundlichkeit auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentli-, che Besonderheit der Erfindung darin, dass zur Übertragung eines Drehmoments zwischen relativ zueinander drehbaren Gewindeelementen der einen und der weiteren Schraubverbindung eine Kupplungseinrichtung eingefügt ist, die bei Erreichen des Festdrehzustandes eines Gewindeelements der einen Schraubverbindung eine weitere Drehbewegung eines Gewindeelements der weiteren Schraubverbindung zulässt. Dadurch lassen sich in einem einzigen Arbeitsgang, bei dem von der Wartungsperson lediglich eines der Gewindeelemente in Drehung versetzt wird, beide Schraubverbindungen betätigen, dass also mittels einer Drehbetätigung sowohl der Festdrehzustand zwischen Filterelement und zugeordnetem Gehäuseteil als auch der Festdrehzustand der Gehäuseteile untereinander hergestellt wird und dadurch die für die Wartung aufzubringende Arbeitszeit wesentlich verringert ist.

Die Anordnung kann mit Vorteil so getroffen sein, dass das Filtergehäuse als Gehäuseteile einen Gehäusetopf, an dem das ein Gewindeelement der ersten Schraubverbindung aufweisende Filterelement mittels dieser Schraubverbindung festlegbar ist, sowie einen Gehäusekopf mit einem Gewindeelement der zweiten Schraubverbindung aufweist, der mittels der zweiten Schraubverbindung mit dem Gehäusetopf verbindbar ist.

Bei besonders vorteilhaften Ausführungsbeispielen weist die Kupplungseinrichtung zwei Kupplungsteile auf, von denen das eine Kupplungsteil in dem Gehäusekopf verdrehsicher aufgenommen ist, das andere Kupplungsteil Bestandteil einer Endkappe des Filterelements ist, die an dem Gehäusetopf festlegbar ist, und dass das im Gehäusekopf aufgenommene eine Kupplungsteil in Axialrichtung der Schraubverbindungen bewegbar ist. Bei dieser Anordnung bildet das dem Gehäusekopf zugeordnete Kupplungsteil bei der Drehbewegung des Gehäusetopfes, die der Bediener für das Verschrauben von Gehäusetopf und Gehäusekopf vornimmt, das antriebsseitige Kupplungsteil für die Betätigung der zweiten Schraubverbindung zwischen Filterelement und Gehäusetopf, wobei wegen der axialen Beweglichkeit des einen Kupplungsteils der Kupplungseingriff mit dem am Filterelement befindlichen Kupplungsteil während des Schraubvorgangs erhalten bleibt.

Mit besonderem Vorteil kann das dem Gehäusetopf zugeordnete eine Kupplungsteil als ringförmiges Mitnehmerelement ausgebildet sein, das mindestens einen vorspringenden Mitnehmersteg aufweist, der an seinem freien Endbereich auf einer Seite eine Anlageschräge und auf seiner anderen, gegenüberliegenden Seite einen Anschlag aufweist.

Hierbei kann die Endkappe als Bestandteil des anderen Kupplungsteils auf ihrer freien Stirnseite mindestens einen Kupplungssteg aufweisen, der auf seiner einen Seite eine Führungsschräge und auf seiner anderen, gegenüberliegenden Seite eine Widerlagerfläche aufweist. Bei dieser Ausbildung der Kupplungseinrichtung bildet diese eine Art Ratschenkupplung, die das zum Aufschrauben des Gehäusekopfs auf diesen ausgeübte Drehmoment durch das Anlaufen der Anlageschräge der Mitnehmerstege an den Führungsflächen der Kupplungsstege der Endkappe auf diese solange überträgt, bis die Schraubverbindung zwischen Filterelement und Gehäusetopf den Festdrehzustand erreicht, wonach die Anlageschräge der Mitnehmerstege die Führungsschräge der Kupplungsstege an der Endkappe überläuft, so dass der Gehäusekopf weiterhin drehbar ist, bis auch der Festdrehzustand beim Aufschrauben des Kopfes auf den Gehäusetopf erreicht ist. Bei der nach dem Montagevorgang erfolgenden Demontage durch eine in entgegengesetztem Drehsinn erfolgende Drehbewegung, wobei die Mitnehmerstege mit ihrem Anschlag nach Überlaufen der Führungsschräge der Kupplungsstege an deren Widerlagerfläche anliegen, wirkt die Kupplungseinrichtung als starre Kupplung. Die Kupplungseinrichtung bildet somit eine Art Ratschenkupplung zwischen dem antriebsseitigen Kupplungsteil (Mitnehmerelement) und dem abtriebsseitigen Kupplungsteil (Kupplungssteg an der Endkappe).

Um die Stärke des Drehmoments einzustellen, das die Kupplungseinrichtung überträgt, bevor die Mitnehmerstege mit ihrer Anlageschräge die Führungsschräge des jeweiligen Kupplungsstegs überlaufen, kann das ringförmige Mitnehmerelement unter der Wirkung eines Energiespeichers, insbesondere in Form einer Druckfeder, in einem Aufnahmeraum des einen Gehäuseteils, wie dem Gehäusekopf, längsverfahrbar geführt sein und mittels einer Halteeinrichtung unverlierbar in dem einen Gehäuseteil, wie dem Gehäusekopf, gehalten sein. Durch die Federhärte der Druckfeder ist dadurch das übertragbare Drehmoment so einstellbar, dass ein übermäßiges Anziehen der Schraubverbindung am Filterelement und eine dadurch mögliche Beschädigung der zugehörigen Dichteinrichtung verhindert sind. Das Drehmoment kann auch durch den Winkel der schiefen Ebenen von Anlageschräge und Führungsschräge verändert werden. Bei der weiteren Drehbewegung des Gehäusekopfes im Zuge des Montagevorgangs setzt sich der Vorgang des Überspringens der Kupplungsteile so lange fort, bis auch die mit dem antriebsseitigen Kupplungsteil verbundene Schraubverbindung, ebenso wie die Verbindung des Gehäusetopfes mit dem Gehäusekopf, festgezogen ist. Beim Vorgang der Demontage mit umgekehrter Drehrichtung wirkt die Kupplungseinrichtung als drehmomentfeste Kupplung durch Anlage der Anlageschräge der Mitnehmerstege an der Widerlagerfläche der Kupplungsstege.

In vorteilhafter Weise kann der jeweilige Mitnehmersteg auf seiner der Mitte des ringförmigen Mitnehmerelements zugewandten Seite einen Rastvorsprung tragen, mit dem die Endkappe mit dem Mitnehmerelement unter Bildung einer wieder lösbaren Clipverbindung spielbehaftet verrastbar ist. Montagevorgang und Demontagevorgang gestalten sich dadurch besonders bequem, weil das Filterelement, verclipst mit dem Gehäusekopf, zusammen mit diesem einsetzbar und aus dem Gehäusetopf herausnehmbar ist.

Bezüglich der Halteeinrichtung, mit der das Mitnehmerelement im Gehäusekopf unverlierbar gehalten ist, kann die Halteeinrichtung einen vorzugsweise am jeweiligen Mitnehmersteg angeordneten Haltesteg aufweisen, der nach außen und von der Ringmitte wegweisend vorspringt und in Anlage mit einem ortsfest in dem Gehäusekopf festgelegten Sicherungsring kommt, sobald das Mitnehmerelement unter der Wirkung des Energiespeichers sich in seiner untersten Verfahrposition befindet.

Um für das Mitnehmerelement eine verdrehsichere, axiale Führung zu bilden, kann der nach außen vorspringende Haltesteg des Mitnehmerelements in einer Ausnehmung in dem Gehäusekopf oder einem Bestandteil desselben längsverfahrbar und verdrehsicher geführt sein.

Bei vorteilhaften Ausführungsbeispielen sind am Mitnehmerelement drei Mitnehmerstege und an der Endkappe drei Kupplungsstege diametral zur Längsachse des Filterelements einander gegenüberliegend angeordnet.

Bezüglich der Ausbildung der mit dem abtriebsseitigen Kupplungsteil verbundenen Schraubverbindung kann die Anordnung so getroffen sein, dass bei einer Drehbewegung des einen gegenüber dem anderen Gehäuseteil, insbesondere beim Aufschrauben des Gehäusekopfes auf den Gehäusetopf, die Kupplungseinrichtung das Filterelement derart mitnimmt, dass es mit seinem anderen freien Ende auf einen Gewindestutzen des anderen Gehäuseteils, wie des Gehäusetopfes, aufschraubbar ist.

Um sicherzustellen, dass die mit dem abtriebsseitigen Kupplungsteil verbundene Schraubverbindung festgezogen ist, bevor die mit dem antriebsseitigen Kupplungsteil verbundene Schraubverbindung den Festdrehzustand erreicht hat, können die zum Einsatz kommenden Gewindeelemente in ihrer Steigung und/oder in ihrer Windungsanzahl derart unterschiedlich sein, dass das Filterelement am Gewindestutzen des Gehäusetopfes, bereits festgelegt ist, bevor der Gehäusekopf vollständig aufgeschraubt ist.

Bei derartiger Auslegung der Gewindeelemente ist sichergestellt, dass beim Aufschraubvorgang zwischen dem bereits festgelegten Filterelement und dem vollständigen Aufschrauben des Gehäusekopfes die Anlageschräge des jeweiligen Kupplungssteges an der einen Endkappe bei Durchrutschen der Kupplung einander überfahren können und in der anderen Drehrichtung beim Abschrauben über den Anschlag des jeweiligen Mitnehmerstegs bei Greifen der Kupplungseinrichtung in Anlage mit der Widerlagerfläche des jeweiligen Kupplungssteges der einen Endkappe des Filterelements kommen.

Nachstehend ist die Erfindung anhand eines in der Zeichnung dargestellten Ausführungsbeispiels im Einzelnen erläutert.

Es zeigen:
- Fig. 1 und 2: abgebrochen gezeichnete Schrägansichten des oberen Endbereichs bzw. des unteren Endbereichs eines für die erfindungsgemäße Filtervorrichtung vorgesehenen Filterelements;
- Fig. 3: eine im Winkel aufgeschnitten und abgebrochen gezeichnete perspektivische Schrägansicht lediglich des Bodenbereichs des Filtergehäuses des Ausführungsbeispiels der erfindungsgemäßen Filtervorrichtung, ohne eingesetztes Filterelement;
- Fig. 4: eine der Fig. 3 ähnliche Darstellung, wobei das in Fig. 1 und 2 dargestellte Filterelement sich im Filtergehäuse in Funktionsposition befindet;
- Fig. 5: einen abgebrochen gezeichneten Längsschnitt des oberen Endbereichs des geschlossen dargestellten Filtergehäuses des Ausführungsbeispiels mit in der Funktionsposition befindlichem Filterelement;
- Fig. 6: eine gegenüber Fig. 5 leicht vergrößert gezeichnete perspektivische Schrägansicht eines ringförmigen Mitnehmerelements der Kupplungseinrichtung des Ausführungsbeispiels;
- Fig. 7 und 8: abgebrochen gezeichnete perspektivische Schrägansichten, in denen unterschiedliche Stellungen dargestellt sind, die Kupplungsteile der Kupplungseinrichtung im Zuge des Montagevorgangs einnehmen, der zur Festlegung des Filterelements und zum Verschluss des Filtergehäuses durchgeführt wird;
- Fig. 9: eine den Fig. 7 und 8 entsprechende Darstellung, wobei die Betriebsstellung der Kupplungsteile beim Vorgang der Demontage dargestellt ist; und
- Fig. 10: eine in kleinerem Maßstab gezeichnete Seitenansicht des vom Gehäusetopf des Ausführungsbeispiels abgenommenem Gehäusekopf mit daran mittels Clipsverbindung gesichertem Filterelement.

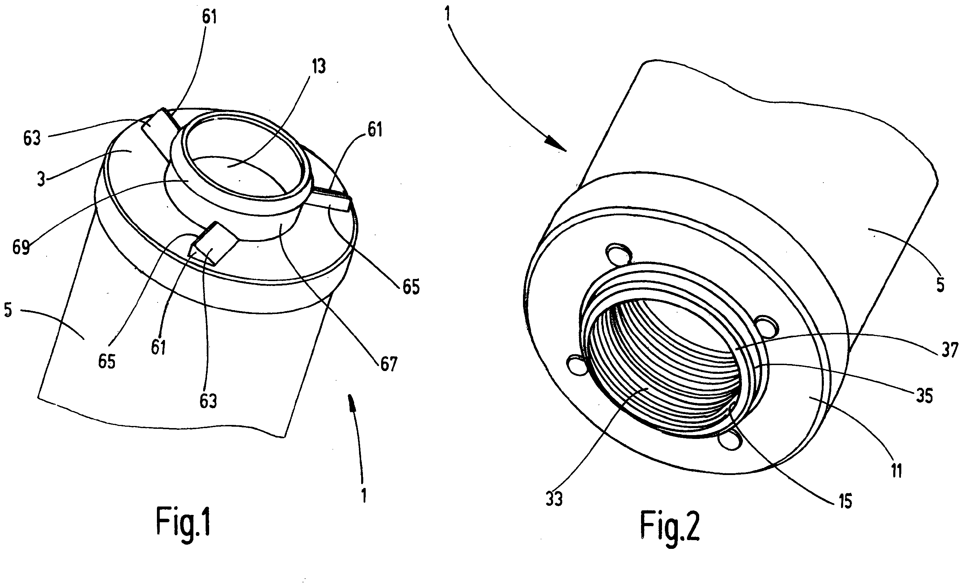

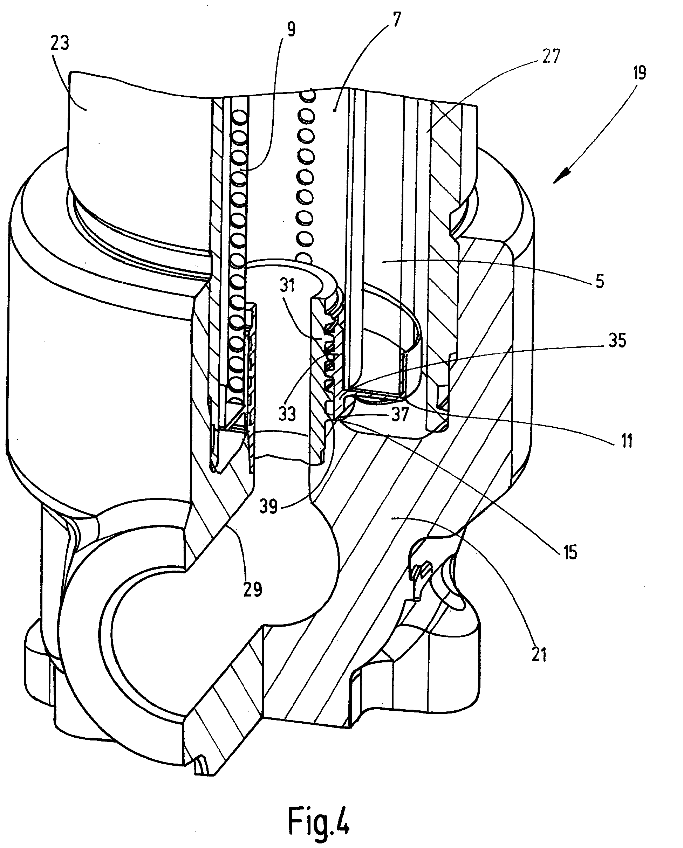

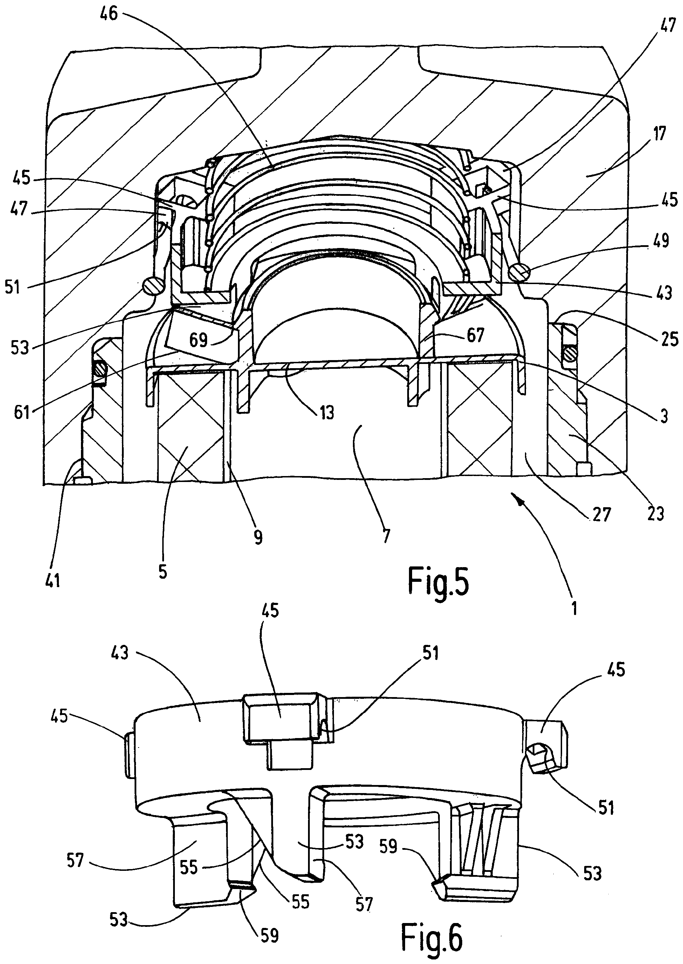

Die Fig. 1 zeigt von einem Filterelement 1, das für den Einsatz bei dem in den Zeichnungen dargestellten Ausführungsbeispiel der erfindungsgemäßen Filtervorrichtung vorgesehen ist, lediglich den oberen Endbereich. Das in der Art einer auswechselbaren Filterpatrone ausgebildete Filterelement 1 weist an dem in Fig. 1 gezeigten oberen Ende eine Endkappe 3 auf, die in der bei derartigen Filterelementen üblichen Weise eine Einfassung für das zugewandte Ende eines Filtermediums 5 bildet, das vorzugsweise aus mehreren plissierten Lagen besteht und einen Hohlzylinder bildet, der, siehe Fig. 4 und 5, einen inneren Filterhohlraum 7 umgibt, in dem sich ein fluiddurchlässiges Stützrohr 9 befindet, dessen der Endkappe 3 zugewandtes Ende zusammen mit dem Ende des Filtermediums 5 in der Endkappe 3 aufgenommen ist. An dem in Fig. 2 gezeigten, unteren Ende befindet sich eine Endkappe 11, die in gleicher Weise wie die obere Endkappe 3 die Einfassung für das zugewandte Ende des Filtermediums 5 und des Stützrohres 9 bildet. Anders als die obere Endkappe 3, die mit einer durchgehenden, ebenflächigen Platte 13 den inneren Filterhohlraum 7 am oberen Ende verschließt, weist die untere Endkappe 11 eine zentrale Öffnung 15 auf. Beim Filtervorgang, bei dem das Filtermedium 5 von dessen Außenseite her zum inneren Filterhohlraum 7 hin durchströmt wird, tritt das abgereinigte Filtrat über die Öffnung 15 aus dem Filterelement 1 aus.

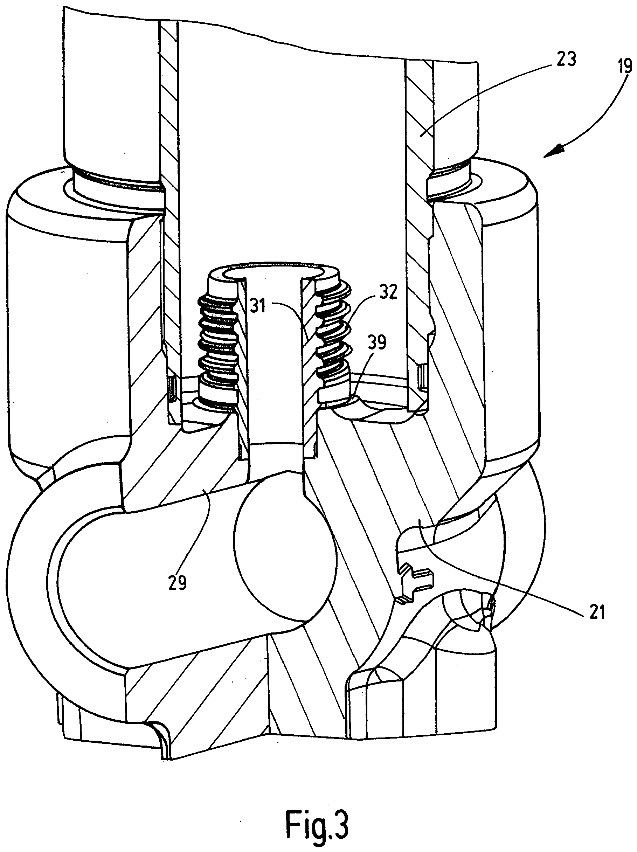

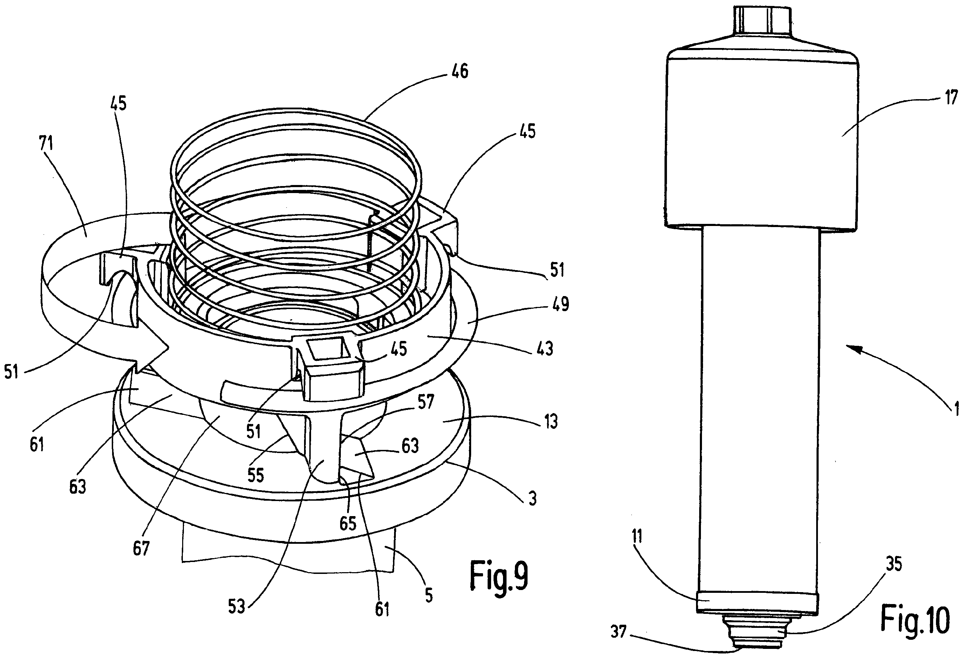

Von den Gehäuseteilen des das Filterelement 1 aufnehmenden Filtergehäuses zeigen die Fig. 5 und 10 einen Gehäusedeckel oder -kopf 17 und die Fig. 3 und 4 den unteren Endabschnitt eines Gehäusetopfes 19. An diesem bildet ein Bodenteil 21 den unteren Abschluss eines zylindrischen, das Filterelement 1 aufnehmenden Hauptteils 23 des Gehäusetopfes 19, dessen oberes, offenes Ende 25 mit dem abnehmbaren Gehäusekopf 17 verschließbar ist. Dieser weist einen in Fig. 3 sichtbaren Fluideinlass auf, über den das abzureinigende Fluid beim Filtervorgang in den Raum 27 zwischen der Außenseite des Filtermediums 5 des Filterelements 1 und der Gehäuseinnenwand einströmt. Der Einlass ist insoweit begrenzt. Für den Austritt des abgereinigten Fluids aus dem Gehäusetopf 19 befindet sich im Bodenteil 21 ein Ausströmkanal 29, der dem Einlasskanal gemäß Darstellung nach der Fig. 3 gegenüberliegt.

Das Filterelement 1 ist im Gehäusetopf 19 des Filtergehäuses mittels einer Schraubverbindung festlegbar, deren eines Gewindeelement durch einen die gehäuseinnere Mündung des Ausströmkanals 29 bildenden, in den Gehäusehauptteil 23 axial vorspringenden Gewindestutzen 31 mit Außengewinde 32 gebildet ist, s. Fig. 3 und 4. Als mit dem Gewindestutzen 31 verschraubbares zweites Gewindeelement weist das Filterelement 1 ein Innengewinde 33 auf. Dieses befindet sich an der Innenseite eines Anschlussstutzens 35, der an der unteren Endkappe 11 des Filterelements 1 deren Öffnung 15 umgibt, wobei der Anschlussstutzen 35 mit seinem freien Endrand eine Dichtfläche 37 bildet. Bei festgedrehter Schraubverbindung ist durch die angedrückte Dichtfläche 37 an einer Anlagefläche 39 am Bodenteil 21 die Abdichtung gebildet.

Der Gehäusekopf 17 ist am Gehäusetopf 19 mittels einer zweiten Schraubverbindung anbringbar, die durch eine Gewindestrecke 41 zwischen Gehäusekopf 17 und dem dem Ende 25 benachbarten Bereich des Gehäusehauptteils 23 gebildet ist. Die Fig. 5 zeigt den vollständig aufgeschraubten Zustand des Gehäusekopfes 17. Eine Kupplungseinrichtung, die Drehbewegungen des Gehäusekopfes 17 beim Aufschrauben oder bei Abschrauben auf den Gehäusetopf 19 auf das Filterelement 1 überträgt, um die zwischen diesem und dem Gehäusetopf 19 gebildete Schaubverbindung festzudrehen oder zu lösen, weist Kupplungsteile auf, von denen eines innerhalb des Gehäusekopfs 17 verdrehsicher angeordnet und das andere Kupplungsteil Bestandteil der zugewandten, oberen Endkappe 3 des Filterelements 1 ist. Das dem Gehäusekopf 17 zugehörige Kupplungsteil, das bei der Übertragung von zum Auf- oder Abschrauben des Gehäusekopfes 17 erfolgenden Drehbewegungen das antriebsseitige Kupplungsteil bildet, ist ein Mitnehmerelement 43 in Form eines Ringkörpers vorgesehen. Dieser weist von seiner kreisrunden Außenseite radial vorspringende Haltestege 45 auf, mit denen es in sich axial erstreckenden Ausnehmungen 47 in der Innenseite des Gehäusekopfes 17 undrehbar und axial verschiebbar geführt ist. Für die Axialbewegung in Richtung auf das offene Ende des Filterkopfes 17 ist das ringförmige Mitnehmerelement 43 durch eine Druckfeder 46 vorgespannt, ist jedoch gegen einen vollständigen Austritt aus dem Gehäusekopf 17 mittels einer Halteeinrichtung unverlierbar gehalten, die beim Ausführungsbeispiel durch einen im Innenraum des Gehäusekopfes 17 sitzenden Sprengring 49 gebildet ist, der von der gewölbten Unterseite 51 der Haltestege 45 übergreifbar ist. Wie am deutlichsten aus Fig. 6 ersichtlich ist, weist das ringförmige Mitnehmerelement 43 an der in Fig. 6 untenliegenden Seite und in Umfangsrichtung auf die drei Haltestege 45 ausgerichtet, je einen axial vorstehenden Mitnehmersteg 53 auf. Jeder Mitnehmersteg 53 weist auf einer seiner in Umfangsrichtung weisenden Seiten eine Anlageschräge 55 und auf seiner anderen, gegenüberliegenden Seite einen Anschlag 57 auf. Auf der der Mitte des ringförmigen Mitnehmerelements 43 zugewandten Seite bildet jeder Mitnehmersteg 53 außerdem einen radial nach innen ragenden Rastvorsprung 59.

Das andere Kupplungsteil, das bezüglich der Drehbewegungen des Gehäusekopfes 17 und des Mitnehmerelements 43 als das abtriebsseitige Kupplungsteil dient, ist, wie am deutlichsten aus Fig. 1 zu ersehen ist, durch drei Kupplungsstege 61 gebildet, die auf der durch die Platte 13 gebildeten Oberseite der oberen Endkappe 3 axial vorstehend angeordnet sind. Jeder Kupplungssteg 61 weist auf einer Seite eine Führungsschräge 63 und auf der gegenüberliegenden Seite eine Widerlagerfläche 65 auf. Wie Fig. 1 ebenfalls deutlich zeigt, ist im Zentralbereich der Platte 13 der Endkappe 3 zwischen den Kupplungsstegen 61 ein axial vorstehendes Zylinderteil 67 angeformt, an dessen freiem Endrand ein rippenartiger, radial nach außen ragender Vorsprung 69 gebildet ist. Mit diesem ist das Filterelement 1 mittels der an den Mitnehmerstegen 53 befindlichen Rastvorsprünge 59 mit dem ringförmigen Mitnehmerelement 43 derart verclipsbar, dass es an diesem gesichert, jedoch entsprechend der Höhe des Zylinderteils 67 relativ zum Mitnehmerelement 43 axial bewegbar ist.

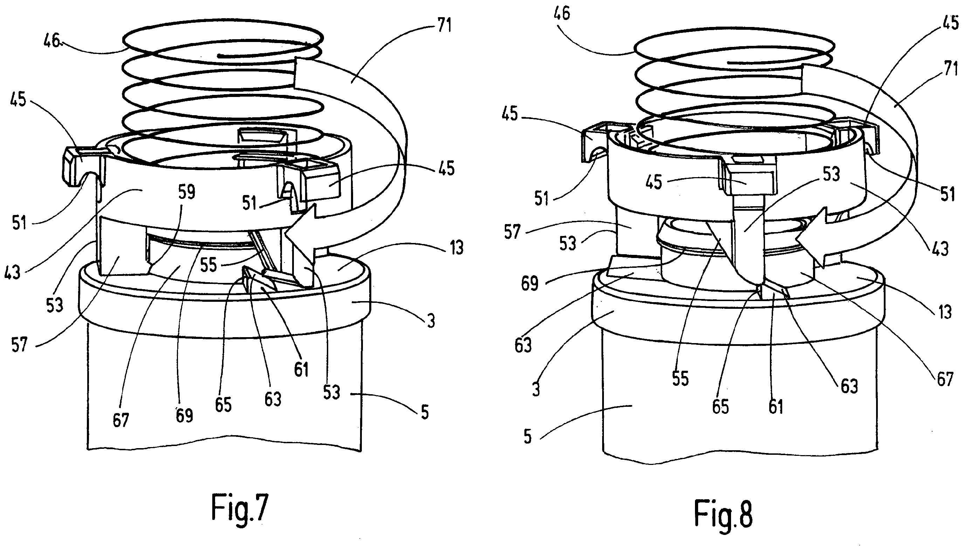

Der zum Einsetzen eines Filterelements 1 in den geöffneten Filtertopf 19 und zum Verschließen des Gehäusetopfes 19 mit dem Gehäusekopf 17 durchzuführende Montagevorgang ist bei der erfindungsgemäßen Vorrichtung in der Weise ausführbar, dass das Filterelement 1 durch Verclipsen mit dem Mitnehmerelement 43 am Gehäusekopf 17 gesichert und in den Gehäusetopf 19 eingesetzt wird, worauf der Gehäusekopf 17 zum Aufschrauben auf den Gehäusetopf 19 gedreht wird, siehe Fig. 7, wo diese Drehbewegung mit einem Drehpfeil 71 angegeben ist. Die Mitnehmerstege 53 des Mitnehmerelements 43, die mit ihrer Anlageschräge 55 unter der Wirkung der Druckfeder 46 an den Führungsschrägen 63 der Kupplungsstege 61 anlaufen, übertragen diese Drehbewegung auf die Endkappe 3 des Filterelements 1, so dass dieses mit dem Innengewinde 33 der unteren Endkappe 11 auf den Gewindestutzen 31 am Bodenteil 21 aufgeschraubt wird, bis diese Schraubverbindung den Festdrehzustand erreicht, bei dem die eine Dichtkante bildende Dichtfläche 37 der Endkappe 11 zur abdichtenden Anlage an der Anlagefläche 39 des Bodenteils 21 gelangt. Bei Erreichen dieses Festdrehzustands überlaufen die Mitnehmerstege 53 bei der Weiterdrehung des Gehäusekopfes 17 die Führungsschrägen 63 an den Kupplungsstegen 61 der Endkappe 3, siehe Fig. 8, so dass die eine federbelastete Ratschenkupplung bildende Kupplungseinrichtung das Weiterdrehen des Gehäusekopfes 17 zum Festdrehzustand der zweiten Schraubverbindung zwischen Gehäusekopf 17 und Gehäusetopf 19 ermöglicht. Beim Einsetzen des Filterelements 1 sind daher in einem einzigen Arbeitsgang das Filterelement 1 durch Betätigen der ersten Schraubverbindung am Gewindestutzen 31 im Gehäusetopf 19 festlegbar als auch das Filtergehäuse durch Anbringen des Gehäusekopfes 17 verschließbar. Bei der Demontage mit entgegengesetzter Drehbewegung des Gehäusekopfes 17 wirkt die Kupplungseinrichtung, wie in Fig. 9 dargestellt, als starre Kupplung, wobei die an den Widerlageflächen 65 der Kupplungsstege 61 anliegenden Anschläge 57 das Filterelement 1 zum Lösen der Verschraubung mit dem Gewindestutzen 31 mitdrehen. Bei weiterer Drehbewegung ist auch die zweite Verschraubung zwischen Gehäusekopf 17 und Gehäusetopf 19 lösbar, so dass das auszuwechselnde Filterelement 1 zusammen mit dem Filterkopf 17 herausnehmbar ist und auch der Demontagevorgang in einem Arbeitsgang ausführbar ist.

Durch Einstellen der Federhärte der Druckfeder 46 ist das zum Überlaufen der Kupplungsteile erreichbare Festdrehmoment des Filterelements 1 derart einstellbar, dass eine Beschädigung der Dichtkante an der Dichtfläche 37 vermieden ist. Bei der Auslegung der Gewindeelemente der beiden Schraubverbindungen sind die Steigungen und die Anzahl der Gewindegänge derart ausgelegt, dass die Schraubverbindung 32, 33 zwischen Filterelement 1 und Bodenteil 21 des Gehäusetopfes 19 festgedreht oder gelöst wird, bevor die zweite Schraubverbindung 41 zwischen Gehäusekopf 17 und Gehäusetopf 19 festgedreht oder gelöst ist. Beispielsweise ist beim gezeigten Ausführungsbeispiel die erste Schraubverbindung an der unteren Endkappe 11 und dem Gewindestutzen 31 als Gewinde mit einer Steigung 4 mit vier Gewindegängen ausgebildet, während zwischen Gehäusekopf 17 und Gehäusetopf 19 ein Feingewinde der Steigung 1,5 mit sechs Gewindegängen ausgebildet ist.

## Patentansprüche

1. Filtervorrichtung mit einem Filterelement (1), das in einem Filtergehäuse aufnehmbar ist, das aus mindestens zwei miteinander verbindbaren Gehäuseteilen (17, 19) besteht, wobei das Filterelement (1) an einem Gehäuseteil (19) mittels einer Schraubverbindung (32, 33) lösbar festlegbar ist und zur Verbindung der Gehäuseteile (17, 19) eine weitere Schraubverbindung (17, 41) vorgesehen ist, **dadurch gekennzeichnet, dass** zur Übertragung eines Drehmoments zwischen relativ zueinander drehbaren Gewindeelementen (33) der einen (32, 33) und der weiteren Schraubverbindung (41) eine Kupplungseinrichtung (43, 46, 61) eingefügt ist, die bei Erreichen des Festdrehzustands eines Gewindeelements (33) der einen Schraubverbindung (32, 33) eine weitere Drehbewegung eines Gewindeelements (17) der weiteren Schraubverbindung (41) zulässt.

2. Filtervorrichtung nach Anspruch 1, **dadurch gekennzeichnet, dass** das Filtergehäuse als Gehäuseteile einen Gehäusetopf (19), an dem das ein Gewindeelement (33) der ersten Schraubverbindung (32, 33) aufweisende Filterelement (1) mittels dieser Schraubverbindung (32, 33) festlegbar ist, sowie einen Gehäusekopf (17) mit einem Gewindeelement (41) der zweiten Schraubverbindung aufweist, der mittels dieser zweiten Schraubverbindung (41) mit dem Gehäusetopf (19) verbindbar ist.

3. Filtervorrichtung nach Anspruch 1 oder 2, **dadurch gekennzeichnet, dass** die Kupplungseinrichtung zwei Kupplungsteile (43, 61) aufweist, von denen das eine Kupplungsteil (43) in dem Gehäusekopf (17) verdrehsicher aufgenommen ist, dass das andere Kupplungsteil (61) Bestandteil einer Endkappe (3) des Filterelements (1) ist, das an dem Gehäusekopf (17) festlegbar ist, und dass das im Gehäusekopf (17) aufgenommene eine Kupplungsteil (43) in Axialrichtung der Schraubverbindungen (32, 33; 41) bewegbar ist.

4. Filtervorrichtung nach einem der vorstehenden Ansprüche, **dadurch gekennzeichnet, dass** das eine Kupplungsteil als ringförmiges Mitnehmerelement (43) ausgebildet ist, das mindestens einen vorspringenden Mitnehmersteg (53) aufweist, der an seinem freien Endbereich auf einer Seite eine Anlageschräge (55) und auf seiner anderen, gegenüberliegenden Seite einen Anschlag (57) aufweist.

5. Filtervorrichtung nach einem der vorstehenden Ansprüche, **dadurch gekennzeichnet, dass** die Endkappe (3) als Bestandteil des anderen Kupplungsteils auf ihrer freien Stirnseite mindestens einen Kupplungssteg (61) aufweist, der auf seiner einen Seite eine Führungsschräge (63) und auf seiner anderen, gegenüberliegenden Seite eine Widerlagerfläche (65) aufweist.

6. Filtervorrichtung nach einem der vorstehenden Ansprüche, **dadurch gekennzeichnet, dass** das ringförmige Mitnehmerelement (43) unter der Wirkung eines Energiespeichers, insbesondere in Form einer Druckfeder (46), in einem Aufnahmeraum des Gehäusekopfes (17) längsverfahrbar geführt ist und mittels einer Halteeinrichtung (45, 59) unverlierbar in dem Gehäusekopf (17) gehalten ist.

7. Filtervorrichtung nach einem der vorstehenden Ansprüche, **dadurch gekennzeichnet, dass** der jeweilige Mitnehmersteg (53) auf seiner der Mitte des ringförmigen Mitnehmerelements (43) zugewandten Seite einen Rastvorsprung (59) trägt, mit dem die Endkappe (3) mit dem Mitnehmerelement (43) unter Bildung einer wieder lösbaren Clipverbindung spielbehaftet verrastbar ist.

8. Filtervorrichtung nach einem der vorstehenden Ansprüche, **dadurch gekennzeichnet, dass** die Halteeinrichtung mindestens einen am ringförmigen Mitnehmerelement (43) angeordneten Haltesteg (45) aufweist, der nach außen und von der Ringmitte wegweisend vorspringt und in Anlage mit einem ortsfest an dem Gehäusekopf (17) festgelegten Sicherungsring (49) kommt, sobald das Mitnehmerelement (43) unter der Wirkung des Energiespeichers (46) sich in seiner untersten Verfahrposition befindet.

9. Filtervorrichtung nach einem der vorstehenden Ansprüche, **dadurch gekennzeichnet, dass** der nach außen vorspringende Haltesteg (45) des Mitnehmerelements (43) in einer Ausnehmung (47) in dem Gehäusekopf (17) oder Bestandteil desselben längsverfahrbar und verdrehsicher geführt ist.

10. Filtervorrichtung nach einem der vorstehenden Ansprüche, **dadurch gekennzeichnet, dass** am Mitnehmerelement (43) drei Mitnehmerstege (53) und an der Endkappe (3) drei Kupplungsstege (61) diametral zur Längsachse des Filterelements (1) einander gegenüberliegend angeordnet sind.

11. Filtervorrichtung nach einem der vorstehenden Ansprüche, **dadurch gekennzeichnet, dass** bei einer Drehbewegung des einen gegenüber dem anderen Gehäuseteil, insbesondere beim Aufschrauben des Gehäusekopfs (17) auf den Gehäusetopf (19), die Kupplungseinrichtung (43, 46; 61) das Filterelement (1) derart mitnimmt, dass es mit seinem anderen freien Ende auf einen Gewindestutzen (31) des Gehäusetopfs (19) aufschraubbar ist.

12. Filtervorrichtung nach einem der vorstehenden Ansprüche, **dadurch gekennzeichnet, dass** die zum Einsatz kommenden Gewindeelemente (32, 33, 41) in ihrer Steigung und/oder in ihrer Windungsanzahl derart unterschiedlich sind, dass das Filterelement (1) am Gewindestutzen (31) des Gehäusetopfes (19) bereits festgelegt ist, bevor der Gehäusekopf (17) vollständig aufgeschraubt ist.

13. Filtervorrichtung nach einem der vorstehenden Ansprüche, **dadurch gekennzeichnet, dass** beim Aufschraubvorgang zwischen dem bereits festgelegten Filterelement (1) und dem vollständigen Aufschrauben des Gehäusekopfes (17) die Anlageschräge (55) des jeweiligen Mitnehmersteges (53) und die Führungsschräge (63) des jeweiligen Kupplungssteges (61) an der einen Endkappe (3) bei Durchrutschen der Kupplung einander überfahren können und in der anderen Drehrichtung beim Abschrauben über den Anschlag (57) des jeweiligen Mitnehmersteges (53) bei Greifen der Kupplungseinrichtung (43, 46; 61) in Anlage mit der Widerlagerfläche (65) des jeweiligen Kupplungssteges (61) der einen Endkappe (3) des Filterelements (1) kommen.

## Claims

1. Filter device with a filter element (1), which can be accommodated in a filter housing consisting of at least two connectable housing parts (17, 19), wherein the filter element (1) can be secured in a detachable manner to a housing part (19) by means of a screw connection (32, 33), and for the connection of the housing parts (17, 19) a further screw connection (17, 41) is provided, **characterised in that,** for the transfer of a torque moment between thread elements (33), which are rotatable relative to one another, of the one screw connection (32, 33) and the other screw connection (41) a coupling device (43, 46, 61) is inserted, which, on attaining the tightened state of a thread element (33) of the one screw connection (32, 33), allows for a further rotation movement of a thread elements (17) of the other screw connection (41).

2. Filter device according to claim 1, **characterised in that** the filter housing comprises as housing parts a housing pot (19), to which a filter element (1) comprising a thread element (33) of the first screw connection (32, 33) can be secured by means of this screw connection (32, 33), and a housing head (17) with a thread element (41) of the second screw connection, which can be connected to the housing pot (19) by means of two screw connection (41).

3. Filter device according to claim 1 or 2, **characterised in that** the coupling device comprises two coupling parts (43, 61), of which the one coupling part (43) is accommodated secured against rotation in the housing head (17), that the other coupling part (61) is a component part of an end cap (3) of the filter element (1) which can be secured to the housing head (17), and that the one coupling part (43) accommodated in the housing head (17) can be moved in the axial direction of the screw connections (32, 33; 41).

4. Filter device according to any one of the preceding claims, **characterised in that** the one coupling part is configured as a ring-shaped driver element (43) comprising at least one projecting driver web (53), which comprises in its free end region, on one side, an oblique contact element (55), and on its other opposing side comprises a stop element (57).

5. Filter device according to any one of the preceding claims, **characterised in that** the end cap (3), as a component of the other coupling part, comprises on its free face side at least one coupling web (61), which comprises on its one side an oblique guide element (63) and on its other opposite side an abutment surface (65).

6. Filter device according to any one of the preceding claims, **characterised in that** the ring-shaped drive element (43), under the effect of an energy storage mechanism, in particular in the form of a pressure spring (46), can be guided in an accommodation space of the housing head (17) in longitudinal travel movement, and is held by means of a holding device (45, 59) in the housing head (17) such that it cannot be lost.

7. Filter device according to any one of the preceding claims, **characterised in that** the respective driver web (53) carries on its side facing towards the middle of the ring-shaped driver element (43) an engagement projection (59), with which the end cap (3) can be engaged with the driver element (43), subject to play, thereby forming a clip connection which can be released again.

8. Filter device according to any one of the preceding claims, **characterised in that** the holding device comprises at least one holding web (45), arranged at the ring-shaped driver element (43), which projects outwards and points away from the ring middle and comes in contact with a securing ring (49), secured in a fixed position at the housing head (17), as soon as the driver element (43), under the effect of the energy storage mechanism (46), is in its lowest travel movement position.

9. Filter device according to any one of the preceding claims, **characterised in that** the outwards projecting holding web (45) of the driver element (43) is guided into a cutout opening (47) in the housing head (17) or a constituent part thereof in a longitudinal travel movement and secured against rotation.

10. Filter device according to any one of the preceding claims, **characterised in that** arranged opposite one another at the driver element (43) are three driver webs (53) and at the end cap (3) are three coupling webs (61) diametrical to the longitudinal axis of the filter element (1).

11. Filter device according to any one of the preceding claims, **characterised in that**, at a rotational movement of the one housing part in relation to the other housing part, in particular at the screwing of the housing head (17) onto the housing pot (19), the coupling device (43, 46; 61) takes the filter element (1) with it in such a way that it can be screwed with its other free end onto a threaded socket (31) of the housing pot (19).

12. Filter device according to any one of the preceding claims, **characterised in that** the thread elements (32, 33, 41) which come into use differ in their pitch and/or in their number of threads in such a way that the filter element (1) is already secured to the threaded socket (31) of the housing pot (19) before the housing head (17) has been completely screwed on.

13. Filter device according to any one of the preceding claims, **characterised in that**, during the screwing procedure between the already secured filter element (1) and the complete screwing on of the housing head (17), the oblique contact element (55) of the respective driver web (53) and the oblique guide element (63) of the respective coupling web (61) at the one end cap (3) can travel over one another as the coupling slips through, and in the other direction of rotation, during unscrewing, by way of the stop (57) of the respective driver web (53), at the gripping the coupling device (43, 46; 61) they come in contact with the abutment surface (65) of the respective coupling web (61) of the one end cap (3) of the filter element (1).

## Revendications

1. Dispositif de filtration comprenant un élément (1) de filtre qui peut être reçu dans une enveloppe de filtre, constituée d'au moins deux parties (17, 19) d'enveloppe pouvant être assemblées les unes aux autres, l'élément (1) de filtre pouvant être fixé de manière amovible à une partie (19) de l'enveloppe au moyen d'un vissage (32, 33) et un autre vissage (17, 41) étant prévu pour l'assemblage des parties (17, 19) de l'enveloppe,
**caractérisé en ce que** pour transmettre un couple, entre des éléments (33) filetés pouvant tourner l'un par rapport à l'autre de l'un (32, 33) et de l'autre vissage (41), il est inséré un dispositif (43, 46, 61) d'accouplement qui, lorsque l'état de serrage à fond d'un élément (33) fileté de l'un des vissages (32, 33) est atteint, autorise un mouvement de rotation supplémentaire d'un élément (17) fileté de l'autre vissage (41).

2. Dispositif de filtration suivant la revendication 1,
**caractérisé en ce que** l'enveloppe du filtre a, comme partie de l'enveloppe un pot (19), sur lequel l'élément (1) de filtre, ayant un élément (33) fileté du premier vissage (32, 33) peut être fixé au moyen de ce vissage (32, 33), ainsi qu'une tête (17) d'enveloppe ayant un élément (41) fileté du deuxième vissage, qui peut être assemblé au pot (19) de l'enveloppe au moyen de ce deuxième vissage (41).

3. Dispositif de filtration suivant la revendication 1 ou 2, **caractérisé en ce que** le dispositif d'accouplement a deux parties (43, 61) d'accouplement, dont la une partie (43) d'accouplement est reçue sans pouvoir tourner dans la tête (17) de l'enveloppe, **en ce que** l'autre partie (61) d'accouplement fait partie d'une coiffe (3) d'extrémité de l'élément (1) de filtre, qui peut être fixée à la tête (17) de l'enveloppe, et **en ce que** la une partie (43) d'accouplement reçue dans le pot de l'enveloppe peut être déplacée dans la direction axiale des vissages (32, 33; 41) .

4. Dispositif de filtration suivant l'une des revendications précédentes, **caractérisé en ce que** la une partie d'accouplement est constituée sous la forme d'un élément (43) d'entraîneur annulaire, qui a au moins une barrette (53) en saillie, ayant à sa partie d'extrémité libre, d'un côté, une pente (55) et de son autre côté opposé, une butée (57).

5. Dispositif de filtration suivant l'une des revendications précédentes, **caractérisé en ce que** la coiffe (3) d'extrémité a, en tant que partie constitutive de l'autre partie d'accouplement, sur son côté frontal libre, au moins une barrette (61) d'accouplement qui, sur l'un de ses côtés, a une pente (63) de guidage et sur son autre côté opposé, une surface (65) de butée.

6. Dispositif de filtration suivant l'une des revendications précédentes, **caractérisé en ce que** l'élément (43) entraîneur annulaire est guidé avec possibilité de se déplacer longitudinalement sous l'effet d'un accumulateur d'énergie, notamment sous la forme d'un ressort (46) accumulateur, dans un espace de réception de la tête (17) de l'enveloppe et est retenu dans la tête (17) de l'enveloppe sans pouvoir se perdre au moyen d'un dispositif (45, 59) de retenue.

7. Dispositif de filtration suivant l'une des revendications précédentes, **caractérisé en ce que** la barrette (53) d'entraîneur respectif porte, du côté tourné vers le milieu de l'élément (43) entraîneur annulaire, une saillie (59) d'encliquetage, avec laquelle la coiffe (3) d'extrémité peut s'encliqueter avec jeu avec l'élément (43) entraîneur en formant une liaison par clip pouvant être redéfaite.

8. Dispositif de filtration suivant l'une des revendications précédentes, **caractérisé en ce que** le dispositif de retenue a au moins une entretoise (45) de retenue qui est montée sur l'élément (43) entraîneur annulaire et qui fait saillie vers l'extérieur et en s'éloignant du milieu de l'anneau et qui vient en contact avec un jonc (49) fixé à poste fixe à la tête (17) de l'enveloppe, dès que l'élément (43) d'entraîneur se trouve dans sa position de déplacement la plus basse sous l'effet de l'accumulateur (46) d'énergie.

9. Dispositif de filtration suivant l'une des revendications précédentes, **caractérisé en ce que** l'entretoise (45) de retenue en saillie vers l'extérieur de l'élément (43) d'entraîneur est guidée, avec possibilité de se déplacer longitudinalement et sans pouvoir tourner, dans un élément (47) de la tête (17) de l'enveloppe ou dans une partie de celle-ci.

10. Dispositif de filtration suivant l'une des revendications précédentes, **caractérisé en ce que** sur l'élément (43) d'entraîneur sont prévues trois barrettes (53) d'entraîneur et sur la plaque (3) d'extrémité trois barrettes (61) d'accouplement, en étant disposées diamétralement par rapport à l'axe longitudinal de l'élément (1) de filtre et en étant opposées l'une à l'autre.

11. Dispositif de filtration suivant l'une des revendications précédentes, **caractérisé en ce que**, s'il se produit un mouvement de rotation de l'une des parties de l'enveloppe par rapport à l'autre, notamment lors du vissage de la tête (17) de l'enveloppe sur le pot (19) de l'enveloppe, le dispositif (43, 46; 61) d'accouplement entraîne l'élément (11) de filtre, de manière à ce qu'il puisse être vissé par son autre extrémité libre sur une douille (31) filetée du pot (19) de l'enveloppe.

12. Dispositif de filtration suivant l'une des revendications précédentes, **caractérisé en ce que** les éléments (32, 33, 41) filetés, venant en prise, ont un pas et/ou un nombre de spires différent, de manière à ce que l'élément (1) de filtre soit fixé déjà à la douille (31) filetée du pot (19) de l'enveloppe avant que le pot (17) de l'enveloppe soit vissé complètement.

13. Dispositif de filtration suivant l'une des revendications précédentes, **caractérisé en ce que**, lors de l'opération de vissage entre l'élément (1) de filtre déjà fixé et le vissage complet de la tête (17) de l'enveloppe, la pente (55) de la barrette (53) de l'entraîneur respectif et la pente (63) de guidage de la barrette (61) d'accouplement respectif peuvent venir l'une sur l'autre sur la une coiffe (3) d'extrémité, et, lors du glissement de l'accouplement et dans l'autre sens de rotation lors du dévissage par la butée (57) de la barrette (53) de l'entraîneur, lors de la prise du dispositif (43, 46; 61) d'accouplement viennent en contact avec la surface (65) de butée de la barrette (61) d'accouplement de la une coiffe (3) d'extrémité de l'élément (1) de filtre.
